# EUROPEAN PATENT SPECIFICATION

(11) **EP 2 036 468 B1**
(45) Date of publication and mention of the grant of the patent: **08.02.2012**
(21) Application number: 08164422.1
(22) Date of filing: 16.09.2008
(51) Int. Cl.: A47J 31/36

(54) **Machine for making beverages, in particular espresso coffee with a system for loading/unloading the wafers**
Gerät zur Zubereitung von Getränken, insbesondere Espresso, mit einem System zum Be- und Entladen von Kaffeepads
Machine pour la préparation de boissons, en particulier expresso, avec un système pour charger et décharger les dosettes de café

(30) Priority: 17.09.2007 IT MI20071792
(43) Date of publication of application: 18.03.2009
(73) Proprietor: Tenacta Group S.p.A., 24052 Azzano S. Paolo (BG) (IT)
(72) Inventor: Morgandi, Arturo, 24129 Bergamo (IT)
(74) Representative: Coletti, Raimondo

(56) References cited:
- WO-A-00/49926

## Description

The present invention relates to a machine for making beverages by infusion through a product wafer. In particular, advantageously the wafer is of the "flexible bag" type and the beverage is espresso coffee. In known "wafer" machines wafer-loading and wafer-unloading operations can be difficult. Inconvenient and/or complex and costly solutions are often proposed.

Prior art which is considered useful for understanding the invention is disclosed in document WO 00/49926 A.

The general object of the present invention is to remedy prior-art drawbacks by providing a machine that enables convenient and rapid performance of loading and unloading operations, automating the operations despite the use of a simple, robust, and economical mechanism.

In view of this object it has been decided to make, according to the invention, a machine for preparing a beverage by infusion comprising a drawer provided with a seat for receiving an infusion wafer, the drawer being slidable horizontally between a position that is partially extracted at the front and which uncovers the receiving seat for inserting a wafer therein and a retracted position in a gap in the machine for aligning the seat under water infusion means through the wafer for dispensing the beverage, two blade elements being supported in the receiving gap of the drawer, respectively before and after the seat in the infusion position, in the sliding direction of the drawer, to enable a wafer to move on the drawer when the drawer slides inside and to stop a wafer moving onto the drawer when the draw is sliding outwards, as the drawer slides towards the extracted position a blade element being suitable for stopping a wafer located in the seat and transferring the wafer to a plane of the drawer behind the seat and the other blade element being suitable for stopping a wafer located on said plane of the drawer to unload the wafer automatically behind the plane.

In order to make the explanation of the innovative principles of the present invention and the advantages thereof over the prior art clearer, with the help of the attached drawings a possible embodiment applying such principles will be disclosed below. In the drawings:
- figure 1 is a schematic laterally raised and partially section view of a machine according to the invention;
- figures 2 to 6 are loading and unloading operating steps in the machine of figure 1.

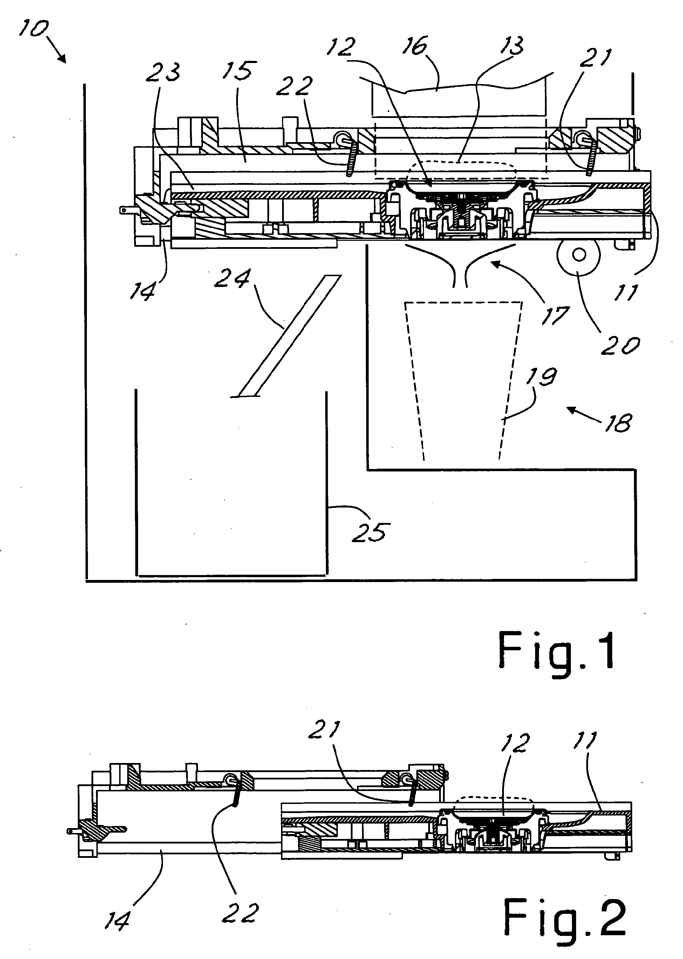

With reference to the figures, in figure 1 a machine is shown schematically, which is generally indicated with 10, for preparing a beverage by infusion and made according to the invention.

The machine 10 comprises a drawer 11 provided with a seat 12 for receiving an infusion wafer 13. Advantageously, the wafer is of the known "flexible bag" type, generally formed of two discs or squares of filtering material welded peripherally to contain the infusion product (for example coffee powder). The seat 12 will have a perforated bottom, possibly with known labyrinth means and valves, for the passage of the beverage.

The drawer is made horizontally slidable along guides 14 to move between a retracted position and a partially extracted position.

In the retracted position, shown in figure 1, the drawer returned inside a gap 15 in the machine to align the seat 12 below known water infusion means 16 through the wafer for dispensing the beverage. The infusion means (which is *per se* known and is therefore not further disclosed) may comprise a source of hot water (for example a boiler or an electric heater) and a pressure supply pump. The infusion means is advantageously vertically mobile (as shown by a dashed line in figure 1) to be introduced into the gap of the drawer and adhere to the seat 12 with a peripheral seal during infusion through the wafer. In the position in figure 1, the seat 12 is also advantageously aligned vertically above a conveyor 17 for conveying the beverages to a receiving gap 18 of a cup 19 or the like. Although a static conveyor is preferable it can also be made integral with the drawer and move therewith.

In figure 2 there is shown the drawer in a position extracted at the front. In this position the seat 12 is uncovered outside the machine to enable a new wafer to be introduced manually into the seat 12.

The drawer can be advantageously moved between the inserted and extracted position by an electric motor 20, for example, with rack coupling on the drawer. Alternatively, the drawer can be made manually movable, as easily imaginable by those skilled in the art.

As can be well seen in the figures, in the gap 15 above the drawer there are two blade elements 21 and 22 that are supported in the gap respectively before and after the infusion position of the gap in the sliding direction of the drawer.

The blade elements are supported to be freely oscillating in the return direction of the drawer (so as to be able to move in a horizontal position) and locked in the opposite direction (so as to remain substantially vertical above and at a short distance from the drawer) so as to be able to permit the passage of a wafer on the drawer when the drawer slides inside and to stop the passage of a wafer on the drawer when the drawer slides outside, as will be explained below.

During sliding of the drawer the front blade element 21 sweeps above the seat 12 whilst the rear blade element 22 sweeps above a plane 23 of the drawer behind the seat 12.

As can be seen in figure 1, below the plane 23 there is advantageously a slide 24 that takes used wafers to inside an accumulating container 25. The container can easily be removable for periodical emptying.

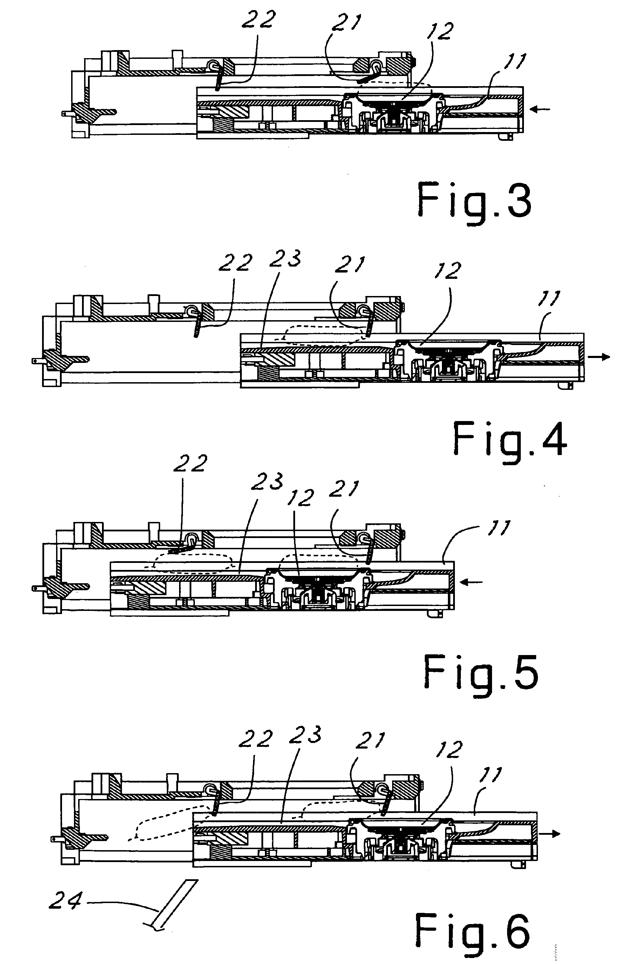

When using the machine, after loading of the wafer in the seat (as shown in figure 2) the drawer is made to retract. The blades do not hinder movement of the wafer on the drawer (figure 3).

The wafer is thus taken to the infusion position (figure 1) and the machine performs a known infusion cycle, dispensing the beverage (for example, espresso coffee) into the cup 19.

By commanding the exit of the drawer, for example to load a new wafer, the blade element 21 stops the used wafer located in the seat 12 and transfers the used wafer from the seat to the plane 23, as can be seen in figure 4.

When the drawer returns, for example after loading a new wafer into the seat 12, the used wafer on the plane 23 goes beyond the blade 22, which moves (figure 5).

Upon subsequent extraction of the drawer (figure 6), the blade element 22 stops the wafer on the plane 23 of the drawer to unload the wafer automatically behind the plane, whilst the wafer that may be located in the seat 12 is in turn moved onto the plane by the blade 21. The wafer that falls back from the plane 23 is collected in the container 25.

It is at this point clear how the set objects have been achieved. With the simple and robust mechanism according to the invention, at each extraction of the drawer the user finds the seat empty and ready to receive a new wafer without having to worry about evacuating the preceding used wafer.

Naturally, the above description of an embodiment applying the innovative principles of the present invention is given only by way of example of such innovative principles and must not therefore be taken to limit the scope of what is claimed herein. For example, the blade elements may have different movements from those of simple rotation to enable the passage of or to block the wafers.

## Claims

1. Machine (10) for preparing a beverage by infusion comprising a drawer (11) provided with a seat (12) for receiving an infusion wafer (13), the drawer being slidable horizontally between a position that is partially extracted at the front and which uncovers the receiving seat (12) for inserting a wafer therein and a retracted position in a gap (15) in the machine for aligning the seat (12) under water infusion (16) means through the wafer for dispensing the beverage, two blade elements (21 and 22) being supported in the receiving gap of the drawer, respectively before and after the seat in the infusion position, in the sliding direction of the drawer, to enable a wafer to move onto the drawer when the drawer slides inside and to stop a wafer moving onto the drawer when the draw is slides outwards, as the drawer slides towards the extracted position a blade element (21) being suitable for stopping a wafer located in the seat (12) and transferring the wafer to a plane (23) of the drawer behind the seat (12) and the other blade element (22) being suitable for stopping a wafer located on said plane (23) of the drawer to unload the wafer automatically behind the plane (23).

2. Machine according to claim 1, **characterised in that** the blade elements (21 and 22) are supported to be freely oscillating in the return direction of the drawer and locked in the opposite direction.

3. Machine according to claim 1, **characterised in that** it comprises an electric drive (20) for moving the drawer between the retracted position and the extracted position.

4. Machine according to claim 1, **characterised in that** the unloaded wafers are sent to an accumulating container (25).

5. Machine according to claim 4, **characterised in that** in the gap below the plane (23) of the drawer there is a tilted plane (24) that takes the unloaded wafers to said accumulating container (25).

6. Machine according to claim 1, **characterised in that** the infusion means (16) is movable vertically to be introduced into the gap of the drawer and adhere to the seat with a peripheral seal during infusion through the wafer.

7. Machine according to claim 1, **characterised in that** in the position of the drawer retracted into the gap the seat is aligned vertically above a conveyor (17) of the beverages to a receiving gap for receiving a cup.

## Patentansprüche

1. Maschine (10) zur Zubereitung eines Aufgussgetränks umfassend eine Schublade (11), die mit einem Sitz (12) für die Aufnahme eines Aufgusspads (13) versehen ist, wobei die Schublade zwischen einer auf der Vorderseite teilweise ausgezogenen Stellung, in der der Aufnahmesitz (12) zum Einlegen des Pads offen ist, und einer eingeschobenen Stellung in einem Spalt (15) der Maschine waagrecht gleitbar ist, um den Sitz (12) unter die Mittel (16) zum Aufgießen von Wasser durch das Pad zur Ausgabe des Getränks auszurichten, wobei zwei Klingenelemente (21 und 22) jeweils vor und nach dem Sitz in der Aufgussstellung im Schubladenaufnahmespalt in Gleitrichtung der Schublade getragen werden, damit ein Pad auf die Schublade gelangen kann, wenn die Schublade eingefahren wird, bzw. kein Pad auf die Schublade gelangen kann, wenn sie ausgefahren wird, wobei beim Herausfahren der Schublade in die ausgezogene Stellung ein Klingenelement (21) dazu geeignet ist, ein im Sitz (12) befindliches Pad zu stoppen und dieses auf eine Ebene (23) der Schublade hinter dem Sitz (12) zu übertragen, während das andere Klingenelement (22) dazu geeignet ist, ein auf dieser Ebene (23) der Schublade befindliches Pad zu stoppen, um das Pad automatisch hinter der Ebene (23) abzuladen.

2. Maschine nach Anspruch 1, **dadurch gekennzeichnet, dass** die Klingenelemente (21 und 22) so gelagert sind, dass sie frei in die Rückschubrichtung der Schublade schwingen und in der Gegenrichtung gesperrt sind.

3. Maschine nach Anspruch 1, **dadurch gekennzeichnet, dass** sie einen Elektroantrieb (20) zum Bewegen der Schublade zwischen der eingeschobenen und der ausgezogenen Stellung umfasst.

4. Maschine nach Anspruch 1, **dadurch gekennzeichnet, dass** die abgeladenen Pads in einen Sammelbehälter (25) verbracht werden.

5. Maschine nach Anspruch 4, **dadurch gekennzeichnet, dass** sich in dem Spalt unterhalb der Ebene (23) der Schublade eine schräge Ebene (24) befindet, die die abgeladenen Pads in den Sammelbehälter (25) bringt.

6. Maschine nach Anspruch 1, **dadurch gekennzeichnet, dass** die Aufgussmittel (16) senkrecht beweglich sind, um in den Spalt der Schublade eingeführt zu werden, und mit einer umlaufenden Dichtung während des Aufgusses durch das Pad am Sitz anhaften.

7. Maschine nach Anspruch 1, **dadurch gekennzeichnet, dass** der Sitz in der in den Spalt eingeschobenen Schubladenstellung senkrecht über einem Getränkeförderer (17) auf einen Aufnahmespalt zur Aufnahme eines Bechers ausgerichtet ist.

## Revendications

1. Machine (10) pour préparer une boisson par infusion comprenant un tiroir (11) pourvu d'un siège (12) pour recevoir une dosette d'infusion (13), le tiroir étant coulissable horizontalement entre une position qui est partiellement extraite sur le devant et qui découvre le siège de réception (12) pour insérer une dosette dans celui-ci et une position rétractée dans un interstice (15) dans la machine pour aligner le siège (12) sous des moyens (16) d'infusion d'eau à travers la dosette pour distribuer la boisson, deux éléments de lame (21 et 22) étant supportés dans l'interstice de réception du tiroir, respectivement avant et après le siège dans la position d'infusion, dans la direction de coulissement du tiroir, pour permettre à une dosette de se déplacer sur le tiroir lorsque le tiroir coulisse à l'intérieur et pour arrêter une dosette se déplaçant sur le tiroir lorsque le tiroir coulisse vers l'extérieur, tandis que le tiroir coulisse vers la position extraite un élément de lame (21) étant adapté pour arrêter une dosette située dans le siège (12) et transférer la dosette sur un plan (23) du tiroir derrière le siège (12) et l'autre élément de lame (22) étant adapté pour arrêter une dosette située sur ledit plan (23) du tiroir pour décharger la dosette automatiquement derrière le plan (23).

2. Machine selon la revendication 1, **caractérisée en ce que** les éléments de lame (21 et 22) sont supportés pour osciller librement dans la direction de retour du tiroir et verrouillés dans la direction opposée.

3. Machine selon la revendication 1, **caractérisée en ce qu'**elle comprend un entraînement électrique (20) pour déplacer le tiroir entre la position rétractée et la position extraite.

4. Machine selon la revendication 1, **caractérisée en ce que** les dosettes déchargées sont envoyées vers un récipient d'accumulation (25).

5. Machine selon la revendication 4, **caractérisée en ce que** dans l'interstice en dessous du plan (23) du tiroir il y a un plan incliné (24) qui amène les dosettes déchargées audit récipient d'accumulation (25).

6. Machine selon la revendication 1, **caractérisée en ce que** les moyens d'infusion (16) sont mobiles verticalement pour être introduits dans l'interstice du tiroir et adhérer au siège avec un joint périphérique pendant l'infusion à travers la dosette.

7. Machine selon la revendication 1, **caractérisée en ce que**, dans la position du tiroir rétracté dans l'interstice, le siège est aligné verticalement au-dessus d'un convoyeur (17) de boissons vers un interstice de réception pour recevoir un godet.
